# DEMANDE DE BREVET EUROPEEN

(11) **EP 1 832 414 A1**
(43) Date de publication de la demande: **12.09.2007**
(21) Numéro de dépôt: 06110994.8
(22) Date de dépôt: 10.03.2006
(51) Int. Cl.: B32B 27/08, B29B 11/12, B29B 11/14, B29C 43/14, B29C 43/20, B65D 41/02

(54) **Objet synthétique multicouche**

(71) Demandeur: Aisapack Holding SA, 1896 Vouvry (CH)
(72) Inventeur: THOMASSET, Jacques, 1896, Vouvry (CH)
(74) Mandataire: Grosfillier, Philippe

(57) **Abrégé**

L'invention concerne un objet multicouche (1) sans axe de symétrie qui forme une coque ayant une face supérieure et une face inférieure de surface sensiblement identique S ; lesdites faces étant reliées entre elles par l'intermédiaire d'une extrémité (3) formant la périphérie de l'objet ; ledit objet étant fabriqué par compression dans un moule d'une dose multicouche de résines thermoplastiques à l'état fondu ; ledit objet comprenant un point (2) correspondant au centre d'alimentation de ladite dose dans le moule ; ladite extrémité (3) étant distante du centre d'alimentation (2) d'une longueur curviligne variable R, les valeurs maximale et minimale de R étant respectivement A et B ; ledit objet comprenant une première partie monocouche (6) formée d'une première résine et d'une deuxième partie multicouche (5) au moins formée d'une couche de ladite première résine ; lesdites parties (5) et (6) étant délimitées par l'extrémité (4) de la structure multicouche ; ladite extrémité (4) étant distante du centre d'écoulement (2) d'une longueur curviligne R1 ; objet multicouche caractérisé par :
a. B/A ≤ R1/R ≤ 1
b. R1 est maximal pour R = A
c. R1 minimal pour R = B

L'invention concerne également un procédé permettant de réaliser un objet multicouche sans axe de symétrie.

## Description

### Domaine de l'invention

La présente invention concerne des objets multicouche sans symétrie axiale et leur méthode de réalisation.

### Etat de la technique

Les brevets US4876052, JP2098415 et les demandes de brevet W02005087473, W02005087601, W02005084904, W02005084903, W02005084902 décrivent des objets multicouches ainsi que des méthodes ou techniques de fabrication d'objets multicouches par compression moulage. Ces méthodes consistent à comprimer dans un moule une dose multicouche de résines thermoplastiques à l'état fondu ; l'écrasement de ladite dose conduisant à un objet comportant lui aussi une structure multicouche. Les objets obtenus selon ces méthodes présentent des propriétés particulièrement avantageuses issues de la structure multicouche qui est obtenue dans l'épaisseur de l'objet. Ainsi, de tels objets peuvent avoir une perméabilité réduite aux gaz, aux arômes, ou diverses substances chimiques.

Cependant, les méthodes décrites dans l'art antérieur permettent de réaliser seulement des objets multicouches ayant un axe de symétrie, c'est-à-dire formant un corps de révolution. Ces objets présentent une longueur d'écoulement identique dans toutes les directions. De nombreux objets ne présentent pas d'axe de symétrie et ne peuvent être par conséquent réalisés à partir des descriptions de l'art antérieur.

### Objet de l'invention

L'invention concerne des objets multicouches sans axe de symétrie réalisés par compression moulage d'une dose multicouche ; ainsi que leur méthode de fabrication. Ces objets peuvent être par exemple des têtes de tube ovales, des bouchons ovales, ou des composants d'emballage rectangulaires.

### Résumé de l'invention

L'invention consiste en un objet multicouche sans axe de symétrie qui forme une coque ayant une face supérieure et une face inférieure de surface sensiblement identique S ; lesdites faces étant reliées entre elles par l'intermédiaire d'une extrémité formant la périphérie de l'objet ; ledit objet étant fabriqué par compression dans un moule d'une dose multicouche de résines thermoplastiques à l'état fondu ; ledit objet comprenant un point correspondant au centre d'alimentation de ladite dose dans le moule ; ladite extrémité étant distante du centre d'alimentation d'une longueur curviligne variable R, les valeurs maximale et minimale de R étant respectivement A et B ; ledit objet comprenant une première partie monocouche formée d'une première résine et d'une deuxième partie multicouche au moins formée d'une couche de ladite première résine ; lesdites parties et étant délimitées par l'extrémité de la structure multicouche ; ladite extrémité étant distante du centre d'écoulement d'une longueur curviligne R1 ; objet multicouche caractérisé par :
a. B/A≤R1/R≤1
b. R1 est maximal pour R = A
c. R1 minimal pour R = B

### Description détaillée de l'invention

L'invention sera mieux comprise ci-après au moyen d'une description détaillée des exemples illustrés par les figures suivantes.

### Brève description des figures

Les figures 1 et 2 illustrent un objet multicouche de l'art antérieur formant un corps de révolution. Pour ces objets les longueurs d'écoulement sont identiques autour de l'axe de symétrie.

Les figures 3 et 4 illustrent un objet multicouche sans axe de symétrie, mais ayant des longueurs d'écoulement identique autour du centre d'alimentation 2 de la dose.

La figure 5 illustre le concept inventif pour un objet de géométrie tridimensionnelle. Cet objet sans axe de symétrie comprend une partie multicouche centrale et au moins une partie monocouche 6 située proche de l'extrémité 3 de l'objet. L'extrémité 4 de la structure multicouche 5 est située à une distance variable de l'extrémité 3 de l'objet.

La figure 6 illustre le concept inventif pour une pièce plane.

Les figures 7 et 8 montrent l'application de l'invention pour un objet plan de géométrie ovale ou elliptique.

Les figures 9 à 11 illustrent un bouchon ovale multicouche réalisé selon l'invention.

Les figures 12 à 15 illustrent une tête ovale multicouche de tube flexible. Ces figures montrent la géométrie modifiée de l'objet pour que la partie multicouche de l'objet se superpose avec la jupe flexible multicouche assemblée par soudage ou surmoulage.

Les figures 16 à 18 illustrent l'application de l'invention à des têtes multicouches de géométrie carrées pour briques en carton.

Les figures 20 à 23 illustrent une méthode de moulage consistant à guider l'écoulement dans la cavité du moule.

### Description détaillée des figures

L'invention concerne un objet multicouche ne formant pas un corps de révolution, l'objet étant fabriqué par compression moulage d'une dose multicouche de résine thermoplastique à l'état fondu.

L'art antérieur décrit des objets formant des corps de révolution. Ces objets sont caractérisés par le fait que la longueur d'écoulement entre l'axe de symétrie, qui est aussi le centre d'alimentation de la dose, et le bord formant la périphérie de l'objet est constante. Pour ces objets, la propagation radiale de la structure multicouche lors de la compression de la dose est identique dans toutes les directions. La structure multicouche forme donc également un corps de révolution à l'intérieur de l'objet.

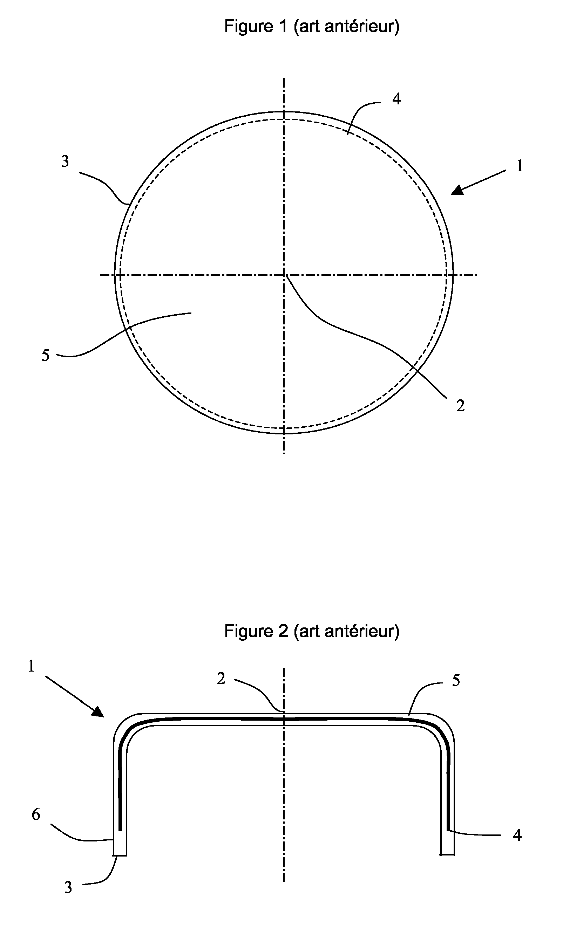

La figure 1 illustre un objet multicouche de l'art antérieur. L'objet multicouche 1 comporte un centre d'alimentation 2 correspondant au point autour duquel la dose est centrée dans le moule avant compression. Pour les objets de l'art antérieur le point 2 correspond à l'intersection entre l'objet 1 et l'axe de symétrie. Le point 2 est aussi le centre d'écoulement, c'est-à-dire le point autour duquel la matière s'écoule lors de la compression. L'extrémité 3 de l'objet correspond à la plus grande distance d'écoulement. La structure multicouche présente une limite 4 à partir de laquelle l'épaisseur de l'objet n'est formée que d'une seule couche. Le contour 4 délimite la partie multicouche 5, de la partie monocouche 6 de l'objet. Pour les objets de l'art antérieur, la distance entre les contours 3 et 4 est constante.

La figure 2 présente la vue en coupe de l'objet. La structure multicouche forme une partie dudit objet qui s'étend depuis le centre d'écoulement jusqu'à l'extrémité 4. Comme l'objet forme un corps de révolution, l'écoulement est identique dans toutes les directions autour du point 2.

Pour des objets sans axe de symétrie, la propagation radiale de la structure multicouche varie selon les directions. Aussi, l'optimisation de la géométrie de l'objet et du procédé ne peut pas se faire à partir des descriptions de l'art antérieur. Une difficulté de la réalisation d'objets multicouches par compression moulage est de contrôler la propagation des différentes couches et d'éviter notamment que des couches emprisonnées apparaissent en surface de l'objet. Etant donné que les écoulements ne sont pas identiques dans toutes les directions, le contrôle de la position des couches dans l'objet ne peut être déduit des descriptions de l'art antérieur. Une autre difficulté est l'optimisation de la géométrie et du procédé afin que la structure multicouche s'étende dans une grande partie de l'objet.

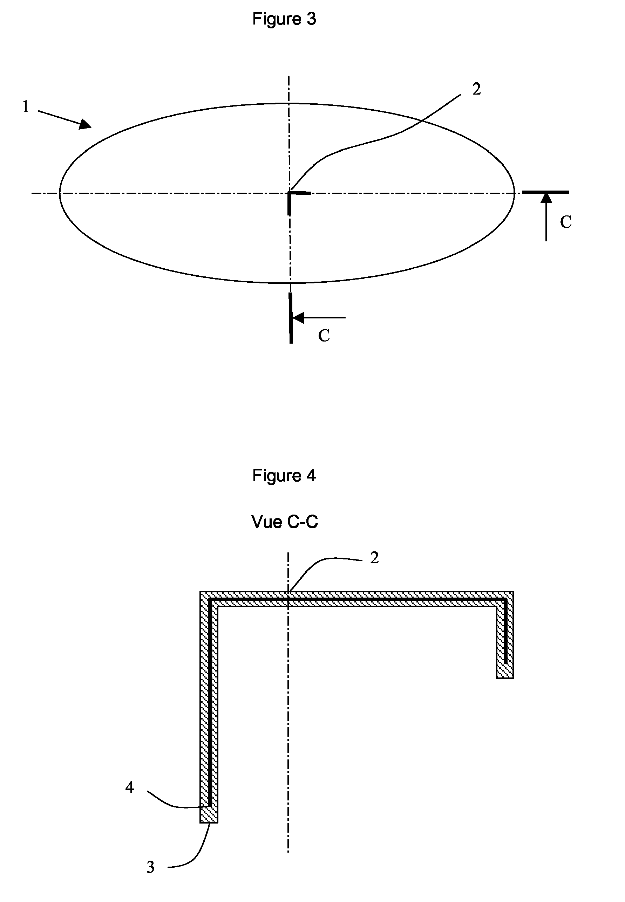

Avant d'aller plus en avant dans l'exposé de l'invention, considérons le cas particulier d'un objet ne formant pas un corps de révolution mais dont les longueurs d'écoulement à partir du centre de compression de la dose sont identiques. Cet objet est illustré figures 3 et 4. La figure 4 représente une vue en coupe selon I direction A de l'objet représenté figure 3. Comme le montre la figure 3 cet objet ne forme pas un corps de révolution. Cependant, Il est possible d'appliquer pour ces objets les mêmes règles qu'aux objets formant un corps de révolution, car la formation et la propagation de la structure multicouche pendant la compression dépend principalement de l'écoulement et du chemin parcouru. Dans ce cas, le chemin parcouru est identique dans toutes les directions à partir du centre de compression ou d'alimentation de la dose, ce que montre la vue en coupe de l'objet illustrée figure 4. La distance entre le centre d'alimentation G et l'extrémité 3 est constante. La longueur d'écoulement étant la même dans toutes les direction, la distance entre le centre d'alimentation 2 et l'extrémité 4 de la structure multicouche constante également. Cependant, cet objet présente peu d'intérêt car sa géométrie est généralement très éloignée des besoins du marché. La modification d'objets existants pour obtenir une longueur d'écoulement constante conduit généralement à des surplus de matière et à des surcoûts importants. D'autre part, ce cas particulier peut être déduit de l'art antérieur par l'homme de l'art. Les objets ne formant pas un corps de révolution mais ayant une longueur d'écoulement constante à partir du centre d'alimentation de la dose, ne sont pas le sujet de la présente invention.

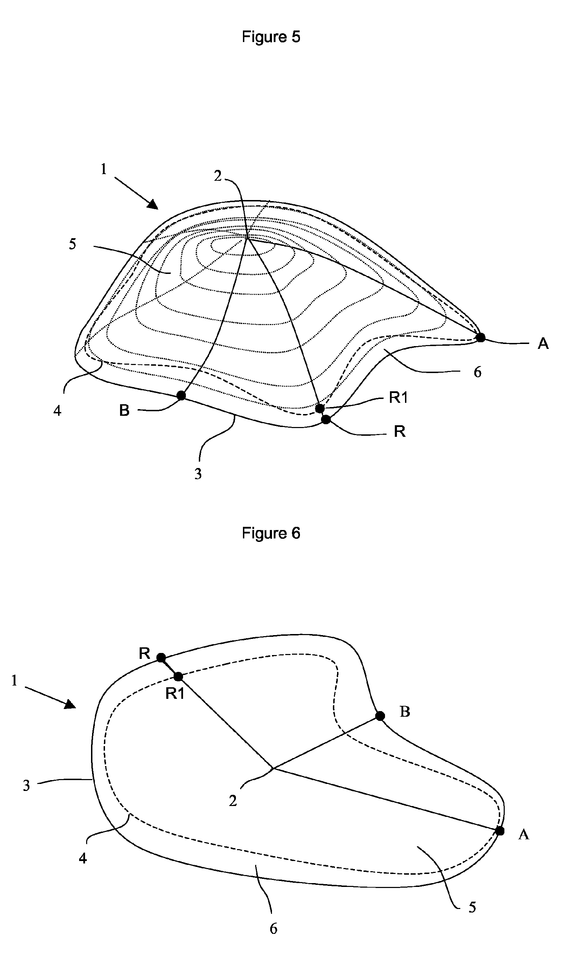

L'invention concerne un objet sans axe de symétrie, moulé par compression d'une dose multicouche de résine. Cet objet illustré figure 5 forme une coque délimitée par un bord 3. On ne trouve pas dans cet objet un point de la coque à partir duquel la longueur curviligne reliant le bord 3 est constante. Cet objet présente un point 2 correspondant au centre d'alimentation de la dose. La longueur d'écoulement autour du point 2, c'est-à-dire la distance curviligne R entre le point 2 et l'extrémité 3 est variable. Les valeurs maximale et minimale de R sont notées respectivement A et B. L'asymétrie de l'objet est caractérisée par le rapport B/A. Pour les objets de l'art antérieur, c'est-à-dire des objets formant un corps de révolution, ce rapport est égal à 1. Les objets dont il est question dans l'invention présentent un rapport B/A inférieur à 1. Par exemple, ce rapport est de l'ordre de 0,5 pour une tête de tube ovale. Lors de la fabrication de ces objets, la propagation de la structure multicouche n'est pas identique autour du point d'alimentation de la dose ; ce qui conduit à des objets dont une partie seulement est multicouche. La structure multicouche est délimitée par une extrémité 4, ladite extrémité étant généralement invisible en surface. La distance variable entre le centre d'alimentation 2 et l'extrémité 4 de la structure multicouche est notée R1. L'objet multicouche obtenu est caractérisé par le fait que la distance entre les extrémités 3 et 4 est variable sur le pourtour de l'objet et égale à (R-R1). Il a été trouvé que la distance (R-R1) entre les extrémités 3 et 4 était minimale dans la direction d'écoulement maximale ; et que la distance (R-R1) était maximale dans la direction d'écoulement minimale.

La structure multicouche définit une surface S1 inférieure à la surface S de l'objet. Afin de maximaliser la fraction multicouche de l'objet, il est favorable de pousser l'extrémité 4 proche de l'extrémité 3, sans que les couches emprisonnées émergent en surface de l'objet. Le rapport S1/S représentant la fraction multicouche de l'objet, est maximale quand l'extrémité 4 rejoint l'extrémité 3.

La distance curviligne R1 entre le centre d'alimentation de la dose 2 et l'extrémité de la structure multicouche 4 dépend de la distance R entre le centre d'alimentation 2 et l'extrémité de l'objet 3. II a été trouvé que le rapport R1/R est supérieur ou égal à B/A et inférieur ou égal à 1. Dans la direction pour laquelle R est égal à A, le rapport R1/R est maximal et peut atteindre 1 ; et dans la direction pour laquelle R est égal à B, le rapport R1/R est minimal et peut être égal à B/A.

La figure 6 illustre le concept inventif pour une pièce plane dont la géométrie n'est pas un disque. La distance radiale R entre le centre d'alimentation de la dose 3 et l'extrémité 3 de l'objet n'est pas constante. La distance radiale R1 entre le centre d'alimentation de la dose et l'extrémité 4 de la structure multicouche varie également selon la direction considérée autour du point 2. Cet objet est caractérisé par le fait que la distance (R-R1) varie sur tout le pourtour de l'objet. Cette distance est maximale quand la distance R est égale à la valeur minimale B, et la distance (R-R1) est minimale quand la distance R est égale à la valeur maximale A. II a été trouvé que le rapport R1/R est compris entre B/A et 1. II est observé également pour ces objets que la fraction multicouche surfacique S1/S est supérieure à B/A.

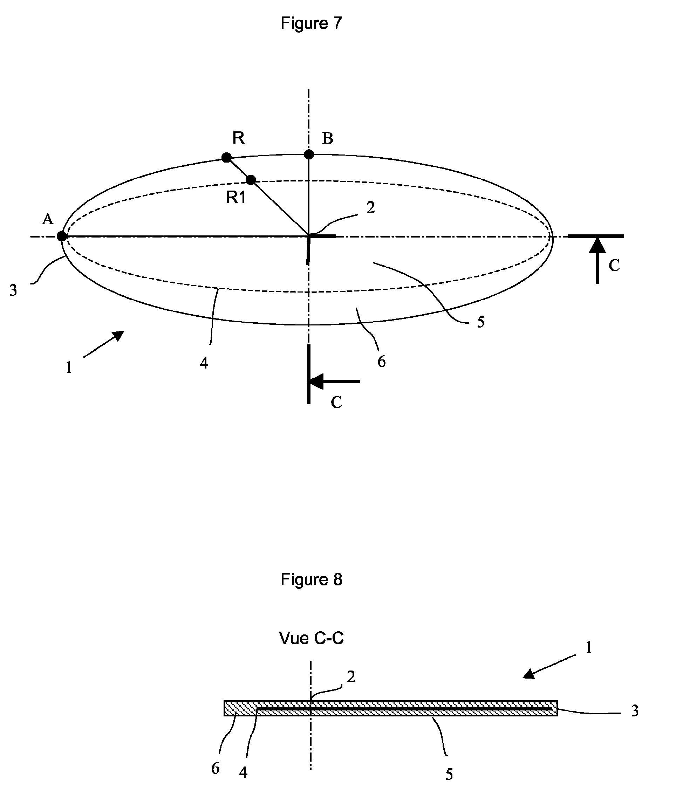

Les figures 7 et 8 illustrent l'application de l'invention à la réalisation d'un objet plan dont le contour forme une ellipse ou un ovale. La figure 7 montre l'objet vu de dessus ; tandis que la vue 8 montre l'épaisseur de l'objet selon la coupe C-C. Comme le montrer la figure 7, la dose est alimentée en 2. La distance d'écoulement radiale autour du point 2 est variable. Cette distance d'écoulement est représentée par la distance R entre l'extrémité 3 de l'objet et le centre d'alimentation de la dose 2. La distance radiale R maximale selon le plus grand axe de l'ellipse est notée A, et la distance R minimale selon le plus petit axe de l'ellipse est noté B. L'objet comprend une partie centrale multicouche notée 5 et une partie périphérique monocouche notée 6 ; les parties 5 et 6 de l'objet étant délimitées par l'extrémité 4 de la structure multicouche. La distance entre le centre d'alimentation de la dose 2 et l'extrémité 4 est notée R1.

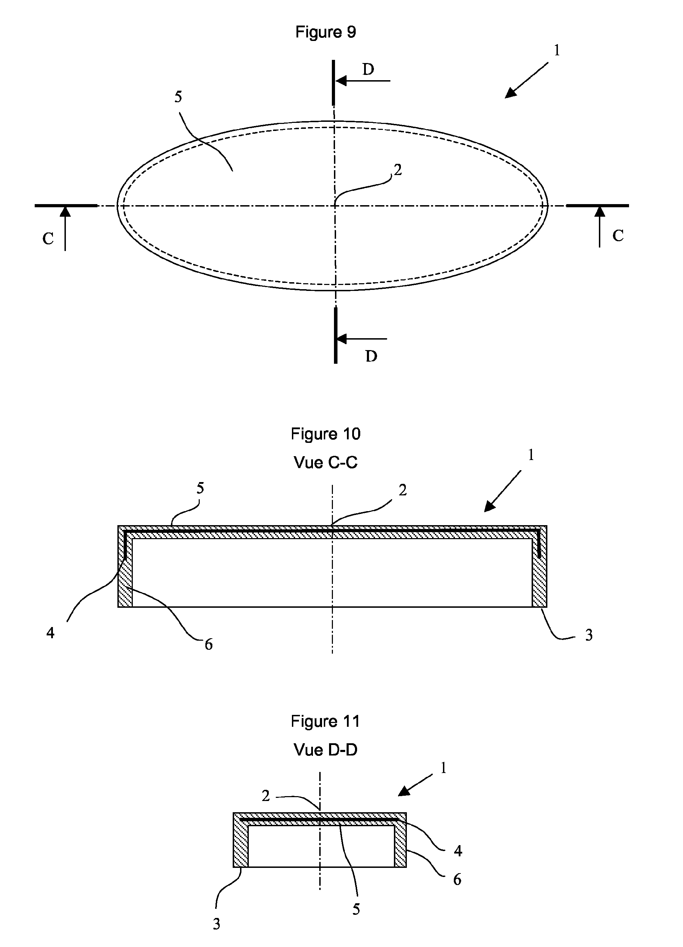

Les figures 9, 10 et 11 illustrent l'application de l'invention à des objets tels que des bouchons ovales. La représentation du bouchon est schématique, seule la forme globale du bouchon a été conservée dans un soucis de clarté de l'exposé. La figure 9 montre le bouchon en vue de dessus. Les vues en coupe C-C et D-D illustrées figures 10 et 11 montrent l'épaisseur de l'objet et la propagation de la structure multicouche selon le grand axe et selon le petit axe du bouchon ovale. La figure 9 montre le centre d'alimentation 2 de la dose situé à l'intersection du grand axe et du petit axe du bouchon. La structure multicouche 5 forme toute la paroi supérieure du bouchon et en particulier s'étend au delà de la zone d'étanchéité avec le goulot de l'emballage. La figure 10 montre la vue en coupe selon le grand axe. L'extrémité 4 de la structure multicouche s'est propagée dans la paroi latérale. La figure 11 montre la vue en coupe du bouchon selon le petit axe. L'extrémité 4 de la structure multicouche ne s'est pas propagée dans la paroi latérale. Ce bouchon ovale est composée d'une structure multicouche 5 formant au moins la paroi supérieure, et d'une partie monocouche formant au moins une partie de la paroi latérale. La distance (R-R1) entre l'extrémité 3 du bouchon et l'extrémité 4 de la structure multicouche est variable.

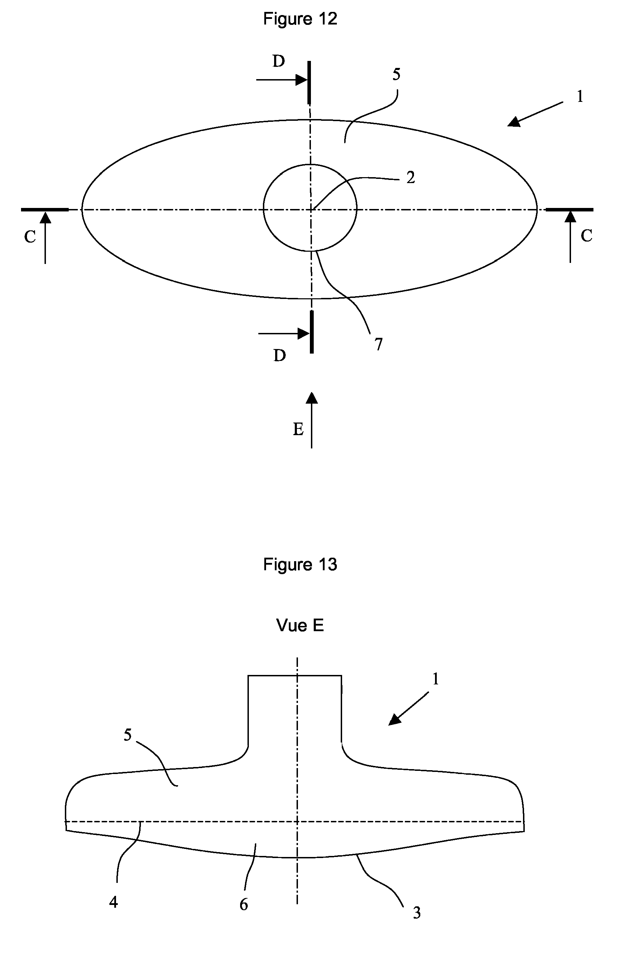

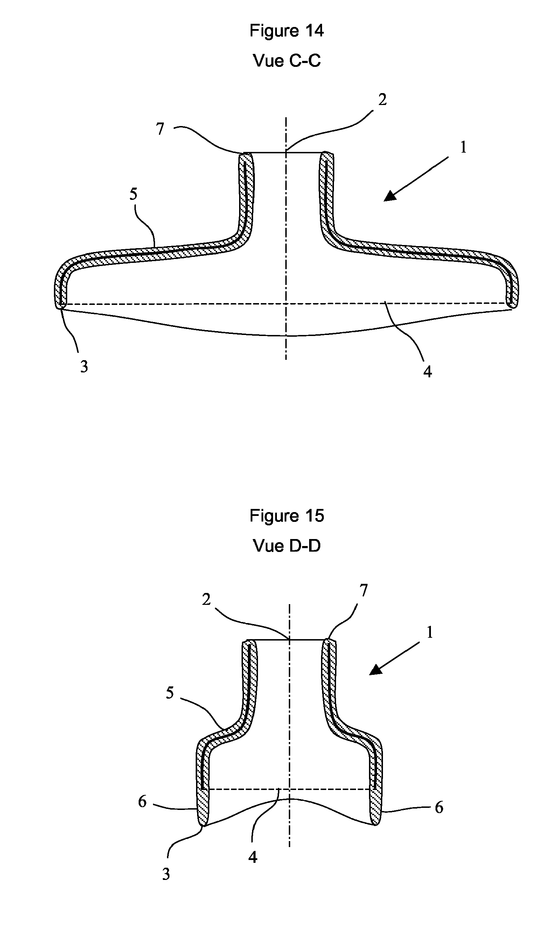

Les figures 12, 13, 14 et 15 illustrent l'application de l'invention à la réalisation de tête de tubes flexibles. Les tubes flexibles sont composés d'une tête moulée et d'une jupe flexible. La tête et la jupe peuvent être assemblés par soudage ou par surmoulage lors de la fabrication de la tête. La figure 12 montre la tête de tube en vue de dessus. Cette tête de tube 1 de géométrie ovale présente un orifice 7. Le centre d'alimentation de la dose est situé à l'intersection du grand axe et du petit axe de l'ovale. La figure 13 montre la tête de tube en vue de coté. La partie multicouche de l'objet s'étend jusqu'à l'extrémité 4. L'extrémité 4 de la structure multicouche est située dans l'objet de telle manière que la jupe multicouche assemblée sur ladite tête se superpose à la structure multicouche 5. Il est intéressant de remarquer que l'extrémité 3 de l'objet a été modifiée par rapport à une géométrie classique de tête de tube afin de permettre une répartition correcte de la structure multicouche 5. La figure 14 montre la vue en coupe selon le grand axe de la tête de tube. L'extrémité 4 de la structure multicouche 5 s'est propagée jusqu'au niveau de l'extrémité 3 de l'objet. La figure 15 montre la vue en coupe selon le petit axe. On observe que l'extrémité 4 de la structure multicouche 5 ne s'est pas propagée jusqu'au niveau de l'extrémité 3 de l'objet.

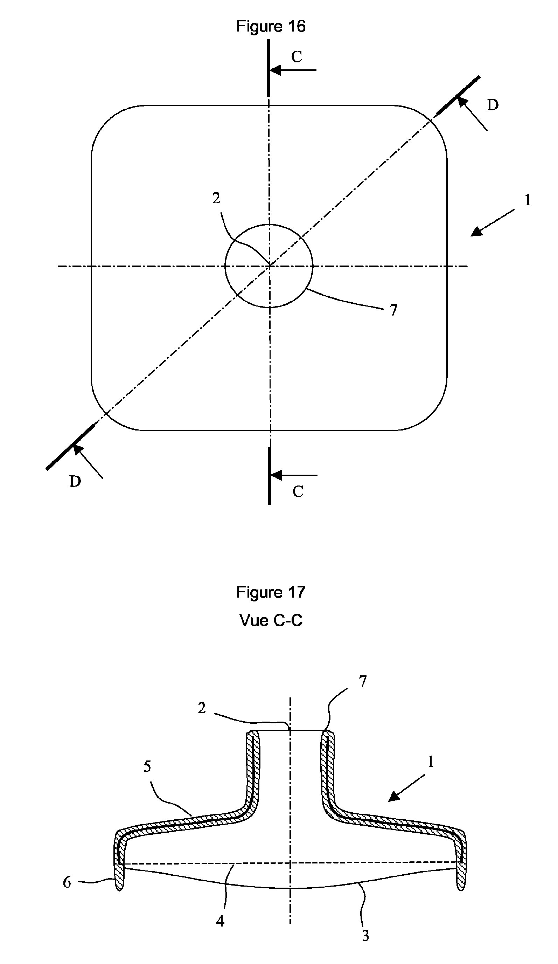

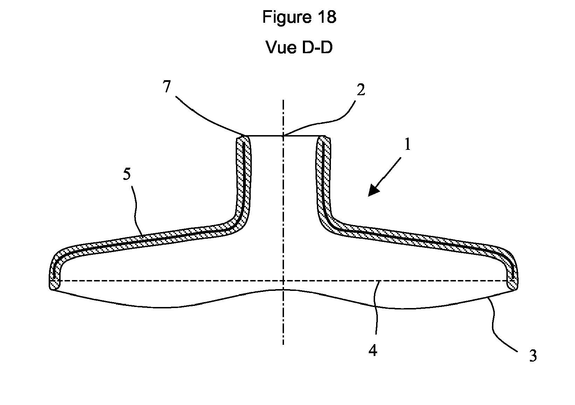

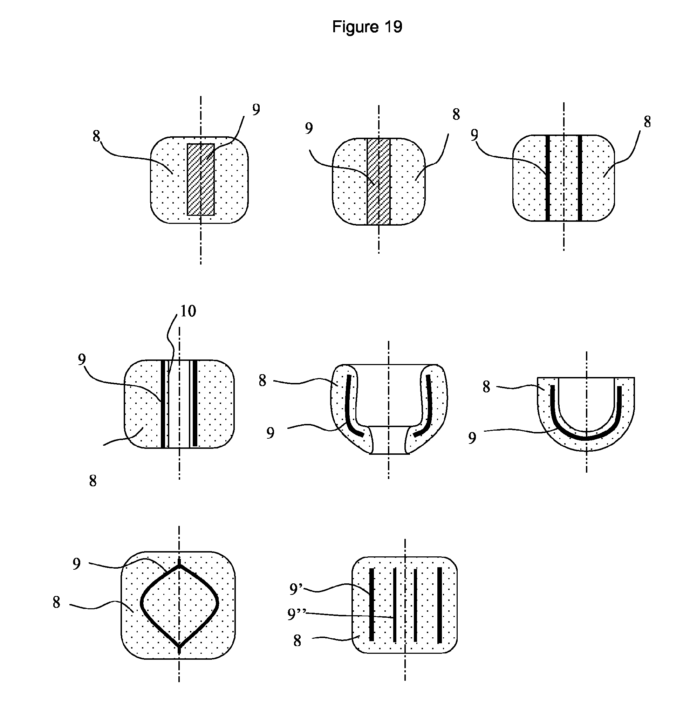

Les figures 16 à 18 illustrent l'application de l'invention pour la réalisation tête d'emballages de forme carrée. Ces têtes carrées sont utilisées pour des emballages de type « brique ». Souvent la paroi latérale associée à la tête forme une structure multicouche en carton et résine thermoplastique. Une difficulté est la réalisation de têtes moulées multicouche afin d'avoir de bonnes propriétés barrière. L'invention peut être utilisée pour réaliser ce type de pièces multicouche. La figure 16 montre la tête multicouche vue de dessus. Cet objet présente un orifice 7 formant un goulot et destiné à extraire le produit de l'emballage. Le centre d'alimentation 2 de la dose est situé à l'intersection des pans de symétrie de l'objet. Les figures 17 et 18 montrent deux vues en coupe de l'objet. Ces figures permettent de visualiser la propagation de la structure multicouche dans deux directions. II est intéressant de remarquer le la structure multicouche 5 s'est propagée dans les parois latérales et de façon homogène sur tout le pourtour de l'objet. Pour cela la géométrie de la tête a été modifiée comme l'indique l'extrémité 3 de l'objet. L'extrémité 3 de l'objet a été modifiée de sorte que la partie multicouche 5 de l'objet se superpose avec la partie cylindrique assemblée sur la tête par soudage ou surmoulage.

Les méthodes décrites dans l'art antérieur, pour la réalisation d'objets multicouches par compression moulage d'une dose multicouche, consistent à utiliser une dose formant ayant un axe de symétrie pour mouler un objet ayant un axe de symétrie. Selon cette méthode, il existe une relation géométrique évidente reliant la dose à l'objet. Cette méthode permet notamment que le fluage de la matière soit identique dans toutes les directions. Partant de cet enseignement, l'homme de l'art chercherait à utiliser une dose sans axe de symétrie pour réaliser des objets sans axe de symétrie afin que les longueurs d'écoulement soient identiques dans toutes les directions. II chercherait par exemple à réaliser un objet ovale à partir d'une dose ovale. La méthode de réalisation d'objet multicouche décrite dans l'exposé de l'invention se différentie nettement de l'art antérieur puisqu'il est proposé d'utiliser une dose ayant un axe de symétrie pour réaliser un objet sans axe de symétrie. Ainsi, selon la méthode proposée, un objet de géométrie ovale est obtenu à partir d'une dose circulaire. Selon cette méthode, il n'existe plus de relation géométrique évidente entre la dose et l'objet. Les longueurs d'écoulement ne sont plus identiques dans toutes les directions, ce qui signifie que le fluage de la dose est variable selon la direction d'écoulement.

L'originalité de la méthode consiste à utiliser une dose multicouche axisymétrique pour réaliser un objet sans axe de symétrie. Cette méthode consiste à former une dose multicouche axisymétrique de résines à l'état fondu, à alimenter ladite dose dans un moule ; puis à comprimer ladite dose afin de créer un écoulement et remplir la cavité dudit moule. Lors de la compression de la dose, l'écoulement des couches de résines conduit au développement d'une structure multicouche dans l'épaisseur de l'objet.

Les doses utilisées dans le cadre de l'invention forment un corps de révolution. Ces doses décrites dans l'art antérieur ont un axe de symétrie et sont généralement fabriquées par co-extrusion continue ou discontinue. De nombreuses doses décrites dans l'art antérieur peuvent être utilisées. A titre d'exemple, les doses décrites dans les brevets US4876052, JP2098415 et les demandes de brevet W02005087473, W02005087601, W02005084904, W02005084903, W02005084902 sont illustrées figure 19. Ces doses comportent au moins deux résines 8 et 9, la résine 9 présentant par exemple une faible perméabilité aux gaz ou au arômes. Le nombre de résine dans la dose n'est pas limité à deux. Un grand avantage de la fabrication de la dose par co-extrusion est la possibilité d'avoir un grand nombre de couches dans la dose avec des couches de résine adhésives intercalées entre des couches de nature différente.

La compression de la dose conduit à des objets multicouches pouvant contenir de nombreuses couches dans leur épaisseur. La structure multicouche obtenue lors de la formation de l'objet par compression de la dose a été largement décrite dans les brevets US4876052, JP2098415 et les demandes de brevet WO2005087473, WO2005087601, WO2005084904, WO2005084903, WO2005084902. Les objets de la présente invention diffèrent des objets de l'art antérieur par la répartition de la structure multicouche, lesdits objets ayant une distance variable entre l'extrémité 4 de la structure multicouche et l'extrémité 3 formant la périphérie de l'objet.

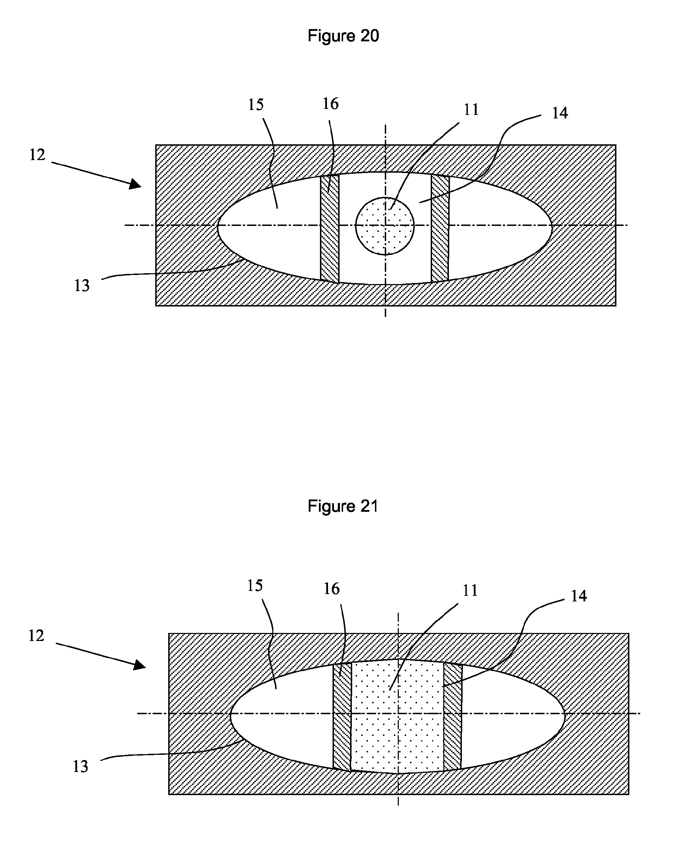

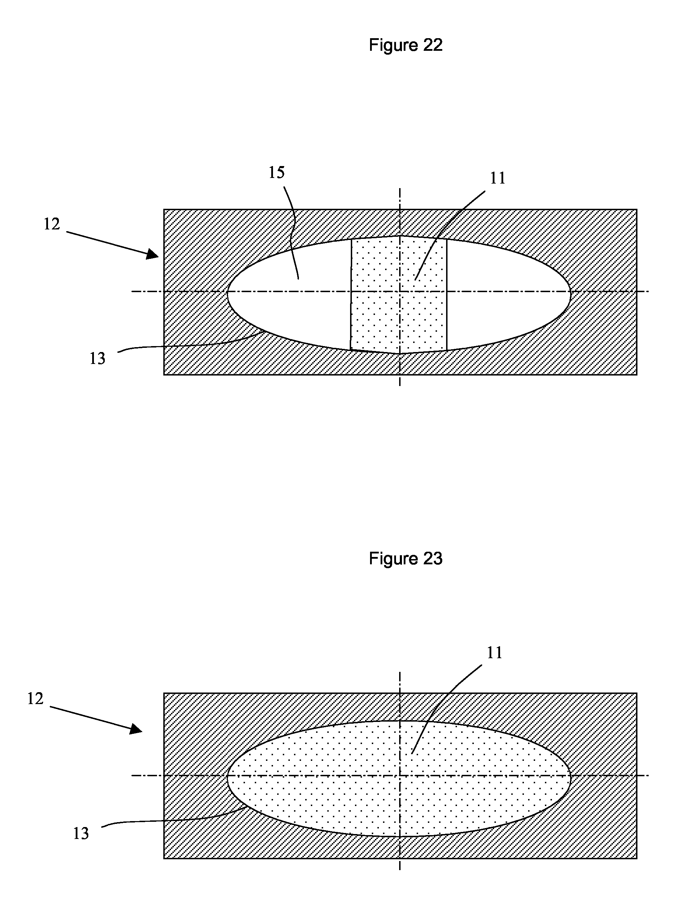

La méthode de moulage consiste à comprimer une dose multicouche axisymétrique pour former un objet sans axe de symétrie. La méthode de moulage la plus simple consiste à comprimer la dose en fermant la cavité du moule. Cependant il peut être avantageux de guider l'écoulement de la dose pendant la compression afin d'améliorer la répartition des couches dans la dose. Cette méthode est illustrée figures 20 à 23. La figure 20 montre la première étape de cette méthode qui consiste à positionner une dose 11 dans la cavité 13 d'un moule 12. Ledit moule comprend en outre des moyens 16 destinés à séparer la cavité 13 en deux parties 14 et 15. La figure 21 illustre la première étape de la compression qui consiste à remplir la partie 14 de la cavité 13 du moule ; les moyens 15 empêchant l'écoulement de la dose dans la partie 15 de ladite cavité 13. La figure 22 montre la dose 11 dans la cavité 13 après ladite première étape de compression. La deuxième étape consiste à comprimer la dose 11 afin de remplir toute la cavité 13 et former l'objet. La figure 23 illustre la fin de la compression, quand la dose 11 rempli complètement la cavité 11 du moule 12.

La méthode illustrée figures 20 à 22 permet de guider l'écoulement de la dose pendant la compression. Il a été observé que cette méthode permet d'augmenter la fraction multicouche de l'objet. Les figures 20 à 22 montrent une méthode qui consiste dans une première étape de compression à guider l'écoulement selon le petit axe de l'objet ; puis dans une deuxième étape à guider l'écoulement dans la direction correspondant au grand axe de l'objet. Cette méthode est avantageuse pour augmenter la fraction multicouche de l'objet.

Les moyens utilisés pour guider l'écoulement pendant la compression sont connus ; lesdits moyens étant par exemple des parties mobiles du moule. Le mouvement desdites parties mobiles obstrue ou libère une partie de la cavité et guide ainsi l'écoulement dans une direction précise.

Les résines utilisées dans le cadre de l'invention correspondent aux résines thermoplastiques couramment utilisés, et plus particulièrement celles utilisées dans le secteur de l'emballage. Parmi les résines barrières qui peuvent être utilisées, on peut citer les copolymères d'éthylène vinyl alcool (EVOH), les polyamides tels que le Nylon-MXD6, les copolymères acrylonitrile methyl acrylate (BAREX), les polymères fluorés tels que le PVDF. Citons également quelques résines pouvant être utilisées pour les couches formant la structure de l'objet : polyéthylène (PE), polypropylène (PP), polystyrène (PS), polyamide (PA), polyester (PET). Cette liste n'est pas exhaustive. Lors du choix des résines, il est important de sélectionner des produits ayant des viscosités voisines. En général, il est préférable d'utiliser des résines qui à la température de travail présentent un rapport de viscosité inférieur à 10, et de préférence on choisira un rapport de viscosité inférieur à 3.

Les dispositifs utilisés pour réaliser des objets selon l'invention sont connus. Le dispositif comprend au moins des moyens pour co-extruder des doses multicouches, des moyens pour transférer la dose multicouche dans un moule de compression, et des moyens pour comprimer la dose afin de former l'objet.

L'invention présente l'avantage de permettre la production d'objets multicouches à grande cadence de production sans modification importante par rapport à un dispositif utilisé pour réaliser des objets monocouche. L'invention nécessite de remplacer notamment le dispositif d'extrusion monocouche par un dispositif d'extrusion multicouche.

## Revendications

1. Objet multicouche (1) sans axe de symétrie qui forme une coque ayant une face supérieure et une face inférieure de surface sensiblement identique S ; lesdites faces étant reliées entre elles par l'intermédiaire d'une extrémité (3) formant la périphérie de l'objet ; ledit objet étant fabriqué par compression dans un moule d'une dose multicouche de résines thermoplastiques à l'état fondu ; ledit objet comprenant un point (2) correspondant au centre d'alimentation de ladite dose dans le moule ; ladite extrémité (3) étant distante du centre d'alimentation (2) d'une longueur curviligne variable R, les valeurs maximale et minimale de R étant respectivement A et B ; ledit objet comprenant une première partie monocouche (6) formée d'une première résine et d'une deuxième partie multicouche (5) au moins formée d'une couche de ladite première résine ; lesdites parties (5) et (6) étant délimitées par l'extrémité (4) de la structure multicouche ; ladite extrémité (4) étant distante du centre d'écoulement (2) d'une longueur curviligne R1 ; objet multicouche **caractérisé par** :
a. B/A≤R1/R≤1
b. R1 est maximal pour R = A
c. R1 minimal pour R = B

2. Objet selon la revendication précédente **caractérisé en ce que** ladite extrémité (4) est contenue dans un plan.

3. Objet selon la revendication précédente comportant une excroissance, ladite excroissance étant formée par la première partie monocouche (6), la longueur de l'excroissance étant maximale pour R=B et minimale pour R=A.

4. Objet selon la revendication précédente où la partie multicouche contient une couche barrière et sur lequel est soudé une feuille multicouche tubulaire, de sorte que la couche barrière de l'objet se superpose avec la couche barrière de ladite feuille et forme sur tout le pourtour de l'objet un recouvrement de valeur constante.

5. Objet selon la revendication précédente selon laquelle l'objet est une tête de tube flexible et dont le renflement forme une zone annulaire de hauteur variable.

6. Objet selon la revendication 4 selon laquelle l'objet est un goulot pour emballage et dont le renflement forme une zone annulaire de hauteur variable.

7. Objet selon la revendication 1 formant un bouchon et dont l'extrémité (4) de la structure multicouche se trouve à la périphérie de la zone d'étanchéité entre le goulot et ledit bouchon.

8. Objet selon la revendication 1 dont la fraction surfacique multicouche est comprise entre B/A et 1.

9. Méthode de fabrication d'un objet multicouche sans axe de symétrie selon la revendication 1, consistant à utiliser une dose ayant un axe de symétrie.

10. Méthode de fabrication d'un objet multicouche selon la revendication précédente consistant à guider l'écoulement séquentiellement dans plusieurs directions.

11. Méthode selon la revendication 10 qui consiste à guider l'écoulement selon une première direction pour laquelle R=B, puis selon une deuxième direction pour laquelle R=A.
